# EUROPÄISCHE PATENTSCHRIFT

(11) **EP 1 297 323 B1**
(45) Veröffentlichungstag und Bekanntmachung des Hinweises auf die Patenterteilung: **12.03.2008**
(21) Anmeldenummer: 01965025.8
(22) Anmeldetag: 22.06.2001
(51) Int. Cl.: G01N 21/47, G01N 21/64, G02B 21/00

(54) **VERFAHREN ZUR OPTISCHEN DETEKTION EINER BELEUCHTETEN PROBE IN MEHREREN DETEKTIONSKANÄLEN**
METHOD FOR OPTICALLY DETECTING AN ILLUMINATED SAMPLE IN SEVERAL DETECTION CHANNELS
PROCEDE DE DETECTION OPTIQUE D'UN ECHANTILLON ECLAIRE DANS PLUSIEURS CANAUX DE DETECTION

(30) Priorität: 29.06.2000 DE 10033179
(43) Veröffentlichungstag der Anmeldung: 02.04.2003
(73) Patentinhaber: Carl Zeiss MicroImaging GmbH, 07745 Jena (DE)
(72) Erfinder: WOLLESCHENSKY, Ralf, 07743 Jena (DE); MÖHLER, Gunter, 07745 Jena (DE)
(74) Vertreter: Hampe, Holger
(86) Internationale Anmeldenummer: PCT/EP2001/007103
(87) Internationale Veröffentlichungsnummer: WO 2002/001201

(56) Entgegenhaltungen:
- DE-A- 19 829 944
- DE-A- 19 829 981
- US-A- 4 786 813
- ROBINSON L ET AL: "CONFOCAL MICROSCOPES PROBE BIOLOGICAL SPECIMENS" LASER FOCUS WORLD, PENNWELL PUBLISHING, TULSA, US, Mai 1994 (1994-05), Seiten 215-220, XP002173905 ISSN: 1043-8092

## Beschreibung

Bei Laser-Scanning-Mikroskopen werden zur Beleuchtung und Anregung der Proben Laser unterschiedlicher Wellenlängen eingesetzt. Das Licht von der Probe weist ebenfalls unterschiedliche Wellenlängen auf, abhängig von der Beleuchtung und von der Probe selbst. (Fluoreszenz). Das von der Probe zurückkommende Licht wird gemessen und ausgewertet in Form von Bilddarstellungen .

Bei einem n-kanaligen System müssen alle Kanäle ausgewertet werden um festzustellen, auf welchen der Kanäle wirklich Daten zu erfassen sind.

Üblicherweise gibt es bei Mikroskopsystemen 2-4 Aufnahmekanäle, die bildmäßig ausgewertet werden. Um festzustellen in welchen Kanälen Licht detektiert wird, muß n/4 mal die Probe gescannt und damit auch beleuchtet werden.

Dieser Vorgang ist aufwendig, bedeutet Zeitverlust und unnötige Belastung der Probe durch Laserlicht.

DE19829944A1 beschreibt ein Verfahren zur Konfiguration eines Laser-Scanning-Mikroskopes.

Hierzu werden Datensätze auf einem Rechner abgelegt
und rechnerisch miteinander verknüpft, um eine optimale Konfiguration zur Anregung und eine optimale Konfiguration zur Detektion des zu untersuchenden Farbstoffes aufzufinden.

### Lösung:

Bei einem n-kanaligen Detektionssystem D werden nach der Verstärkung V n-Komparatoren K bzw. Trigger (für jeden Detektionskanal einen) eingesetzt, die in ihrer Schaltschwelle durch einen Digital-Analog-Wandler einstellbar sind.

Die Schwelle wird so eingestellt, daß sie oberhalb des Rauschpegels liegt. Der Ausgang der Komparatoren wird jeweils auf ein Register R geführt, welches über einen gemeinsamen Clear-Eingang C verfügt und das von einem Computer gelesen werden kann. Vor einer Messung wird das Register ( n-Bit breit ) zurückgesetzt. Wird nun ein Scann-Durchlauf angestoßen, so werden diejenigen Komparatoren schalten, die ein Signal auf ihren Eingang erhalten das über der eingestellten Schwelle liegt. Kanäle, die z.B. wellenlängenabhängig angeordnet sind und kein Signal senden, das über der Schaltschwelle des Komparators liegt sind für die Auswertung uninteressant und können vernachlässigt oder als Summensignal betrachtet werden. Wird der Komparator als Fensterkomparator ausgeführt und beide Schaltschwellen ( obere und untere) sind einstellbar ( z.B. über Digital-AnalogWandler) dann können Signale separiert und ausgewertet werden, die entweder nur innerhalb der Schwellen oder außerhalb ( unter bzw. über den Schwellen ) liegen.

Schon nach einem Scann kann in dem n-Bit breitem Register abgelesen werden, in welchem der n-Kanäle Daten zu erwarten sind.

Sind die Detektoren noch spektral angeordnet ( Art und Weise ist dabei beliebig) so gibt das Register sofort eine Information über die spektralen Anteile des detektierten Lichtes.

Diese Information ist ein wichtiger Bestandteil für die richtige Einstellung eines n-kanaligen Systems. Aus dieser Information können alle Kanäle auf die jeweiligen Wellenlängen eingerichtet werden ohne subjektive Fehler zu machen. Es besteht die Möglichkeit der Autokonfiguration ( online ) eines Systems in Bezug auf spektrale Aufnahmen. Weiterhin gibt es Hinweise für eine manuelle optimale Auswahl ( off line)

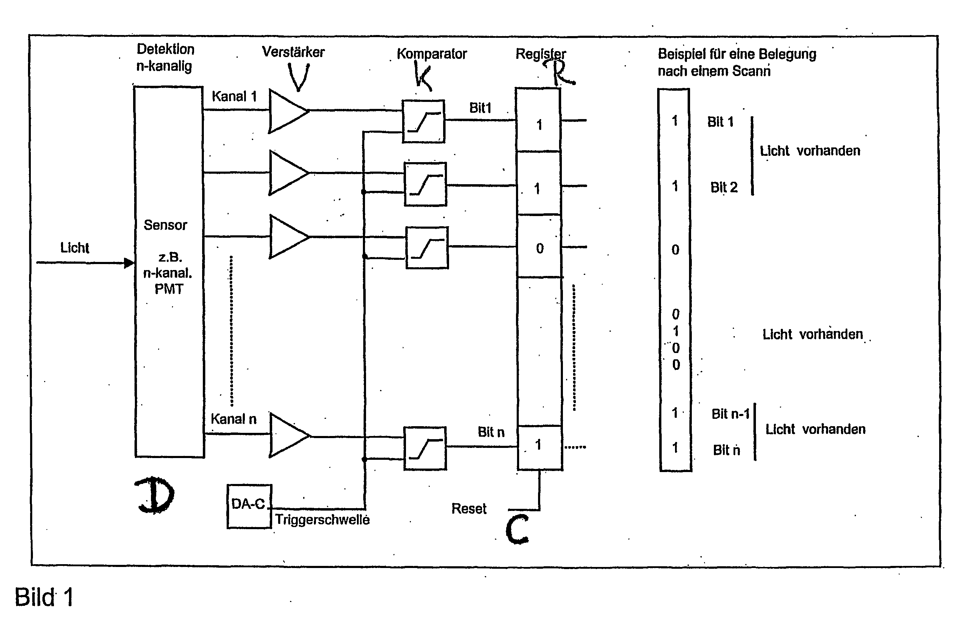

Im Bild 1 wird das Prinzip der Schaltung dargestellt.

Vorteile des erfindungsgemäßen Verfahrens sind:
- bei einem n-kanaligen Detektionssystem stehen sofort Informationen über die aktiven Kanäle bereit
- sind die n-Detektionskanäle spektral empfindlich angeordnet so kann sofort eine Information über die spektralen Anteile angezeigt werden
- sind mehr Detektionskanäle als Aufnahmekanäle vorhanden, so entfällt das mehrmalige Scannen um festzustellen wo Daten vorhanden sind, d.h. geringere Belastung der Probe
- durch Kenntnis der aktiven Kanäle kann das System automatisch die Konfiguration einstellen (aktive Kanäle und Wellenlängenabhängige Einstellungen von Filterkombinationen).
- Das System zeigt an in welchen Kanälen Daten zu erwarten sind und mit welcher Wellenlänge; diese Information erspart dem Operator zeitaufwendige Probeaufnahmen bei manueller Einstellung des Systems.

## Patentansprüche

1. Verfahren zur optischen Detektion einer beleuchteten Probe in einem Mikroskopsystem mit mehreren Aufnahmekanälen zur Lichtdetektion,
wobei für mindestens einen Kanal ein oberer und/ oder unterer Grenzwert eingestellt wird und beim Erreichen dieses Grenzwertes jeder der eingestellten Detektionskänale bezüglich seiner Betriebsweise verändert wird, indem der Detektionskanal abgeschaltt wird oder seine Verstärkung geändert wird oder eine Rückkopplung zur Lichtquelle zur Änderung der Beleuchtungsparameter erfolgt oder die Signale des Detektionskanals bei der Weiterverarbeitung unberücksichtig bleiben.

2. Verfahren nach Anspruch 1,
wobei eine punktweise Beleuchtung und Detektion erfolgt.

3. Verfahren nach Anspruch 1,
wobei eine parallele Beleuchtung und Detektion erfolgt.

4. Verfahren nach Anspruch 3,
wobei eine Mikrotiterplatte beleuchtet und detektiert wird.

5. Verfahren nach einem der Ansprüche 1-4,
wobei eine spektrale Aufspaltung des von der Probe emittierten Lichtes erfolgt.

6. Verfahren nach Anspruch 5,
wobei zur spektralen Aufspaltung ein dispergierendes Element vorgesehen ist, dem ein Multikanaldetektor nachgeordnet ist.

## Claims

1. Method for optical detection of an illuminated sample in a microscope system having several receiving channels for light detection, wherein for at least one channel an upper and/or a lower limit value is set and when this limit value is achieved each of the adjusted detection channels is changed in terms of its mode of operation, in that the detection channel is switched off or its amplification is changed or feedback is provided to the light source to change the illumination parameters or the signals of the detection channel remain out of consideration during further processing.

2. Method as claimed in claim 1, wherein point-wise illumination and detection are carried out.

3. Method as claimed in claim 1, wherein parallel illumination and detection are carried out.

4. Method as claimed in claim 3, wherein a microtiter plate is illuminated and detected.

5. Method as claimed in any one of claims 1-4, wherein the light emitted by the sample is split in a spectral manner.

6. Method as claimed in claim 5, wherein for the purpose of spectral splitting a dispersing element is provided, which has a multichannel detector disposed downstream thereof

## Revendications

1. Procédé de détection optique d'un échantillon éclairé dans un système de microscope comprenant plusieurs canaux de logement pour la détection de lumière,
dans lequel une valeur limite supérieure et/ou une valeur limite inférieure et ou sont réglée(s) pour au moins un canal et chacun des canaux de détection réglés est modifié en ce qui concerne son mode de fonctionnement lorsque cette valeur limite est atteinte, du fait que le canal de détection est déconnecté ou que son amplification est modifiée ou qu'une rétroaction intervient sur la source lumineuse pour la modification des paramètres d'éclairage ou que les signaux du canal de détection restent non pris en compte lors du traitement ultérieur.

2. Procédé selon la revendication 1,
dans lequel un éclairage ponctuel et une détection sont effectués.

3. Procédé selon la revendication 1,
dans lequel un éclairage parallèle et une détection sont effectués.

4. Procédé selon la revendication 3,
dans lequel une plaque de microtitre est éclairée et détectée.

5. Procédé selon l'une quelconque des revendications 1 à 4,
dans lequel une dissociation spectrale de la lumière émise par l'échantillon est effectuée.

6. Procédé selon la revendication 5,
dans lequel il est prévu pour la dissociation spectrale un élément dispersif en aval duquel est disposé un détecteur multicanaux.
